# EUROPEAN PATENT APPLICATION

(11) **EP 2 101 082 A2**
(43) Date of publication of application: **16.09.2009**
(21) Application number: 09002781.4
(22) Date of filing: 26.02.2009
(51) Int. Cl.: F16H 7/08

(54) **Hydraulic auto-tensioner**

(30) Priority: 13.03.2008 JP 2008064380
(71) Applicant: NTN Corporation, Osaka-shi, Osaka 550-0003 (JP)
(72) Inventor: Goto, Shiro, Iwata-shi Shizuoka (JP); Satomura, Aisaku, Iwata-shi Shizuoka (JP)
(74) Representative: Grünecker, Kinkeldey, Stockmair & Schwanhäusser Anwaltssozietät

(57) **Abstract**

A reservoir chamber (13) is defined between the cylinder (1) and the sleeve (4), and a check valve (15) is provided on the path (14) communicating the reservoir chamber (13) with the pressure chamber (6). The check valve (15) closes the path (14) when pushing force is applied and the cylinder (1) and the rod (5) retract relative to each other, and thus the pushing force is buffered by hydraulic oil in the pressure chamber (6). A communicating path (16) communicating the pressure chamber (6) with the reservoir chamber (13) is formed in the rod (5), and a relief valve (18) is mounted in the communicating path (16) to keep the upper limit of the pressure in the pressure chamber (6) constant so that excessive tension is not applied by the rod (5) to the belt (41). A throttle (34) is provided on the outlet side of hydraulic oil of the relief valve (18). This keeps pressure difference between inlet and outlet of the hydraulic oil small when relief valve (18) opens, and thus prevents vibration of a valve body (23) of the relief valve (18).

## Description

### [Technical Field]

This invention relates to a hydraulic auto-tensioner for adjusting the tension of a drive belt for driving automobile engine accessories such as an alternator, a water pump and a compressor of an air conditioner.

### [Background of the Invention]

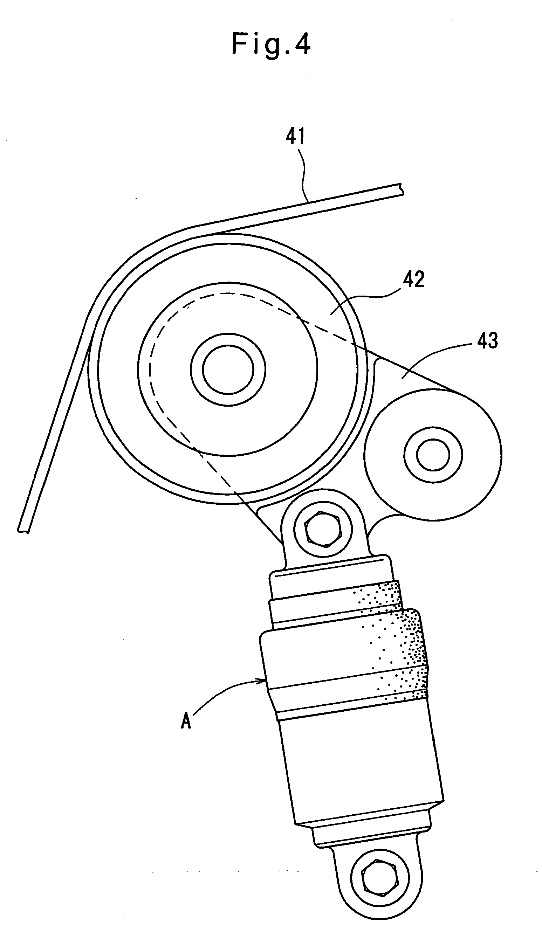

In a belt transmission device that transmits rotation of an engine crankshaft to engine accessories, as shown in Fig. 4, a pivotable pulley arm 43 that supports a tension pulley 42 is provided on the slack side of a belt 41 and adjusting force of a hydraulic auto-tensioner A is applied to the pulley arm 43 to bias the pulley arm 43 in the direction that the tension pulley 42 pushes the belt 41. This keeps the tension of the belt 41 constant.

An auto-tensioner A of this type is disclosed in JP Patent Publication 2000-504395A. This hydraulic auto-tensioner comprises a cylinder having a closed bottom and filled with hydraulic oil, a sleeve that extends from the inner bottom surface of the cylinder, a rod with its lower side slidably inserted in the sleeve to define a pressure chamber inside the sleeve, a spring seat provided on the upper side of the rod, and a return spring mounted between the spring seat and the bottom surface of the cylinder to bias the rod and the cylinder so that they extends relative to each other.

This tensioner further includes an elastic bellows with its ends fit to the spring seat and to the upper end of the outer circumference of the cylinder, respectively, defining a closed reservoir chamber between the cylinder and the sleeve. The bottom of the reservoir chamber communicates with the pressure chamber through a path in which a check valve is provided. When the force in the direction that retracts the cylinder and the rod is applied to the hydraulic auto-tensioner A from the belt 41 via the tension pulley 42 and the pulley arm 43, the check valve closes and hydraulic oil in the pressure chamber flows through a small clearance formed between the inner-diameter surface of the sleeve and the outer-diameter surface of the rod. At this time, damping force is generated in the pressure chamber by viscous resistance of the hydraulic oil flowing through the clearance, which buffers the above-mentioned pushing force.

### [Disclosure of the Invention]

### [Object of the Invention]

In the conventional hydraulic auto-tensioner described above, hydraulic oil in the pressure chamber flows into the minute clearance formed between the inner-diameter surface of the sleeve and the outer-diameter surface of the rod by pushing force applied to the rod by the belt 41. Then the viscous resistance of the flowing hydraulic oil generates a damping force inside the pressure chamber and this damping force buffers the above-mentioned pushing force. Since this damping force is proportional to the pushing force, it becomes larger as the pushing force becomes larger.

Therefore in this conventional hydraulic auto-tensioner, excessive tension of the belt cannot be prevented, and thus the life of the belt is shortened.

The object of this invention is to provide a hydraulic auto-tensioner that can prevent excessive tension of the belt.

To achieve the above-mentioned object, this invention provides a hydraulic auto-tensioner comprising a cylinder having a closed bottom end and filled with hydraulic oil, a sleeve mounted in the cylinder and uprising from the inner bottom surface of the cylinder, a rod with its lower end slidably inserted in the sleeve and defining a pressure chamber in the sleeve, a spring seat provided on the top of the rod, a return spring mounted between the spring seat and the inner bottom surface of the cylinder, and biasing the cylinder and the rod in such a direction that the rod protrudes from the cylinder, wherein a reservoir chamber is defined between the cylinder and the sleeve, the upper opening of the reservoir chamber being closed, and a check valve provided in a path communicating the reservoir chamber with the pressure chamber for closing the path when the pressure in the pressure chamber exceeds the pressure in the reservoir chamber, **characterized in that** the rod is formed with a communicating path communicating the pressure chamber with the reservoir chamber, a relief valve is mounted in the communicating path to open the communicating path when the pressure in the pressure chamber exceeds a set pressure, and a throttle is provided on the hydraulic oil outlet side of the relief valve.

As described above, in this invention, a communicating path is formed in the rod so that the pressure chamber and the reservoir chamber communicate with each other, and the relief valve is mounted in the communicating path. In this configuration, when a pushing force is applied from the belt to the rod and the pressure in the pressure chamber rises and exceeds the set pressure of the relief valve, the relief valve opens and hydraulic oil in the pressure chamber flows to the reservoir chamber through the communicating path. As a result, the damping force generated in the pressure chamber does not exceed the set pressure of the relief valve.

Excessive tension of the belt is thus prevented and the life of the belt is improved.

When the relief valve opens and the hydraulic oil in the pressure chamber is relieved, oil flows into the throttle and to the reservoir chamber. As a result, on the hydraulic oil outlet side, a sudden pressure drop does not occur and the pressure difference between the inlet side and the outlet side of the hydraulic oil is kept small.

If the large pressure difference exists between the oil outlet and inlet when the relief valve is opened, vibration occurs on the valve body and the valve body bumps into the seat face, which results in a noise. However, by providing the throttle as described above, the pressure difference between the oil outlet and the inlet can be kept small, and thus valve body vibration and noise are prevented. To prevent the valve body vibration effectively, it is preferable to provide the throttle immediately above the relief valve.

The throttle may be a small diameter hole, but forming a hole on the rod itself by drilling is difficult and takes a higher cost. The cost for forming the throttle can be reduced with configurations such as the following examples.
(I) A female thread is formed on the inner circumference of the communicating path, a set screw has a male thread thereof in threaded engagement with the female thread, and a clearance between the male thread of the set screw and the female thread is defined as the throttle.
(II) A set screw is pressed in the communicating path, and a groove of a male thread formed on the outer circumference of the set screw is defined as the throttle.
(III) A female thread is formed on the inner circumference of the communicating path, a cylindrical body is pressed in the female thread, and a groove of the female thread is defined as the throttle.
(IV) A cylindrical porous body is pressed in the communicating path and open pores of the porous body are defined as the throttle.
(V) A cylindrical body is pressed in the communicating path, and a center hole with a small diameter formed in the center of the cylindrical body is defined as the throttle.

### [Effect of the Invention]

In this invention, as described above, pressure in the pressure chamber increases when pushing force is applied from the belt to the rod. When this pressure exceeds the set pressure of the relief valve, the relief valve opens and hydraulic oil in the pressure chamber flows into the reservoir chamber through the communicating path. This keeps the upper limit of damping force generated in the pressure chamber to the set pressure of the relief valve, and therefore prevents excessive tension on the belt that decreases durability of the belt.

When the relief valve opens and hydraulic oil in the pressure chamber is relieved to the communicating path, the oil flows into the throttle and reaches the reservoir chamber, and pressure difference between oil inlet and outlet of the relief valve is kept small. Vibration of the valve body and consequent noise can thus be prevented.

### [Best Mode for Embodying the Invention]

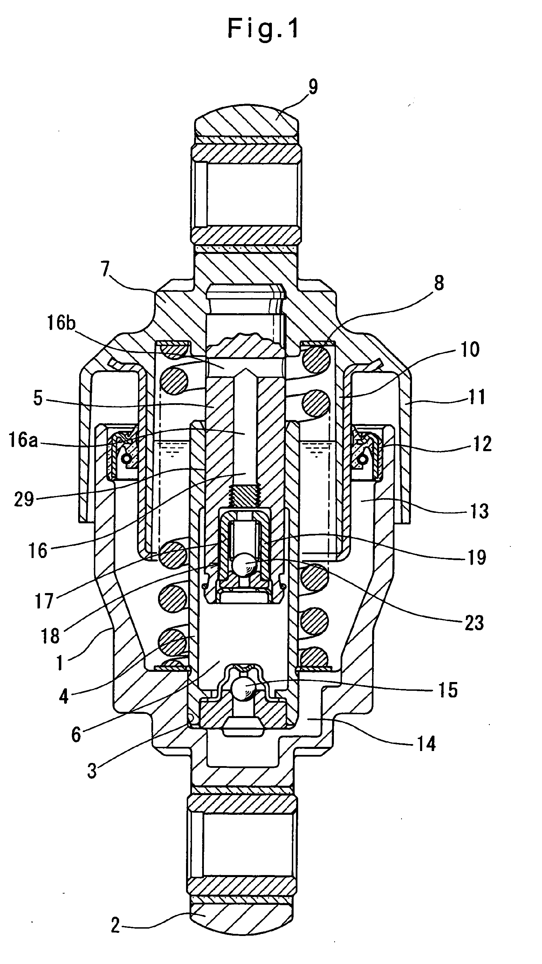

The auto-tensioner embodying this invention is now described with reference to the drawings. As shown in Fig. 1, the tensioner includes a cylinder 1 provided with a closed bottom on which a coupling piece 2 is provided which can be rotatably coupled to an engine block.

On the inner bottom surface of the cylinder 1, a sleeve fitting hole 3 is provided. The lower portion of a sleeve 4 is pressed into the sleeve fitting hole 3. The lower portion of a rod 5 is slidably inserted in the sleeve 4. The rod 5 defines a pressure chamber 6 in the sleeve 4.

A spring seat 7 is mounted on the top end of the rod 5, which is located outside the cylinder 1. A return spring 8 is mounted between the spring seat 7 and the bottom surface of the cylinder 1, biasing the cylinder 1 and the rod 5 in such a direction that the rod 5 protrudes from the cylinder 1.

The spring seat 7 is provided with a coupling piece 9 at its top end that is to be coupled to a pulley arm 43 shown in Fig. 4. Also the spring seat 7 is provided with an inner cylindrical portion 10 covering the upper portion of the return spring 8 and an outer cylindrical portion 11 covering the upper portion of the outer circumference of the cylinder 1 and coaxial with the inner cylindrical portion 10.

An elastic seal 12 such as an oil seal is attached in the upper opening of the cylinder 1. The inner circumference of the elastic seal 12 elastically contacts the outer circumference of the inner cylindrical portion 10, and closes the upper opening of the cylinder, preventing hydraulic oil in the cylinder 1 from leaking.

The elastic seal 12 defines a closed reservoir chamber 13 between the cylinder 1 and the sleeve 4. The reservoir chamber 13 and the pressure chamber 6 communicate with each other through a path 14 formed between the fitting surfaces of the sleeve fitting hole 3 and the sleeve 4. A check valve 15 is provided at the end of the path 14 near the pressure chamber 6. The check valve 15 closes the path 14 when the pressure in the pressure chamber 6 exceeds the pressure in the reservoir chamber 13.

The rod 5 is provided with a communicating path 16, communicating the pressure chamber 6 and the reservoir chamber 13 with each other. The communicating path 16 comprises an axial path 16a that extends axially from the lower end of the rod 5 and a diametrical path 16b that communicates with the upper end of the axial path 16a and extends in the diameter direction of the rod 5. At the end of the communicating path 16 near the pressure chamber 6, a valve fitting hole 17 is provided in which a relief valve 18 is mounted.

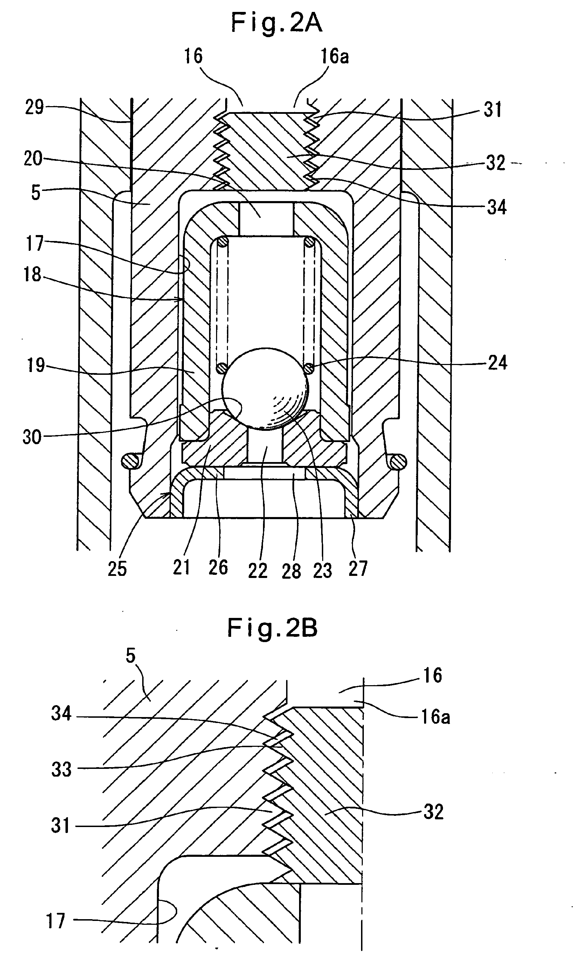

As shown in Fig. 2A, the relief valve 18 is an assembly comprising a cylindrical member 19 with a small hole formed at its closed end, a valve seat 21 closing the other open end of the cylindrical member 19, a spherical valve body 23 that opens and closes a valve hole 22 formed in the valve seat 21, and a valve spring 24 that biases the valve body 23 toward the valve hole 22.

The cylindrical member 19 has an outer diameter smaller than the inner diameter of the valve fitting hole 17, leaving a slight clearance therebetween when the cylinder member 19 is inserted in the valve fitting hole 17. A retainer 25 is provided in the open end of the valve fitting hole 17, preventing the relief valve 18 from coming off.

The retainer 25 is cup-shaped, comprising a disk portion 26 and a cylindrical portion 27 formed on the outer edge of the disk portion 26. The retainer 25 is mounted in position with its cylindrical portion 27 pressed in the valve fitting hole 17. The disk portion 26 has a center hole 28 with a diameter larger than the inner diameter of the valve hole 22 formed in the valve seat 21.

As shown in Figs. 2A and 2B, a female thread 31 is formed on the inner circumference of the axial path 16a of the communicating path 16 at its lower end. A set screw 32 has its male thread 33 in threaded engagement with the female thread 31. A clearance between the male thread 33 and the female thread 31 serves as a throttle 34.

When using the auto-tensioner of the embodiment for adjusting the tension of an engine accessory drive belt 41 shown in Fig. 4, the coupling piece 2 is coupled to an engine block and the coupling piece 9 on the spring seat 7 is coupled to the pulley arm 43 so that an adjusting force is imparted to the pulley arm 43.

In this state, the tension of the belt 41 fluctuates by factors such as fluctuation in the load on the engine accessory. When the tension of the belt 41 decreases, the return spring 8 pushes the cylinder 1 and the rod 5 so that they displace relative to each other in the extending direction, and the looseness of the belt 41 is removed.

When the cylinder 1 and the rod 5 displace relative to each other in the extending direction, the pressure in the pressure chamber 6 becomes lower than the pressure in the reservoir chamber 13, and the check valve 15 opens the path 14. Hydraulic oil in the reservoir chamber 13 therefore flows smoothly into the pressure chamber 6 through the path 14. This makes the cylinder 1 and the rod 5 displace smoothly relative to each other in the extending direction so that the looseness of the belt 41 is immediately removed.

On the other hand, when the tension of the belt 41 increases, the pushing force that retracts the cylinder 1 and the rod 5 is applied from the belt 41. At this time, the pressure in the pressure chamber 6 becomes higher than the pressure in the reservoir chamber 13, and the check valve 15 closes the path 14.

In this state, hydraulic oil in the pressure chamber 6 flows into the reservoir chamber 13 through a minute clearance 29 defined between the inner-diameter surface of the sleeve 4 and the outer-diameter surface of the rod 5, and a damping force is generated in the pressure chamber 6 by viscous resistance of the hydraulic oil flowing in the clearance 29. This damping force buffers the pushing force applied to the hydraulic auto-tensioner, and the cylinder 1 and the rod 5 retract slowly relative to each other up to the position where the pushing force balances with the force of the return spring 8.

If the tension of the belt 41 increases to such an extent that the pressure in the pressure chamber 6 exceeds the set pressure of the relief valve 18, the relief valve 18 opens and hydraulic oil in the pressure chamber 6 flows into the reservoir chamber 13 through the communicating path 16.

Thus, by mounting the relief valve 18 in the valve fitting hole 17, the upper limit of the pressure in the pressure chamber 6 can be kept to the set pressure of the relief valve 18. This prevents excessive tension on the belt 41 and thus improves the durability of the belt 41.

When the relief valve 18 opens, hydraulic oil in the pressure chamber 6 flows into the throttle 34, communicating path 16 and then into the reservoir chamber 13. The throttle 34 prevents a sudden lowering of the pressure at the oil outlet of the relief valve 18.

Because the throttle 34 prevents a pressure drop at the hydraulic oil outlet of the relief valve 18, the pressure difference between the inlet and outlet of the relief valve 18 can be kept small. This in turn prevents vibration of the valve body 23, which leads to collision of the valve body 23 to the seat face 30 of the valve seat 21 and generates noise.

By providing the throttle 34 immediately above the relief valve 18 as shown in Fig. 2A, it is possible to prevent sudden pressure drop at the hydraulic oil outlet side of the relief valve 18. This configuration more effectively prevents vibration of the valve body 23.

In Fig. 2B, a female thread 31 is formed on the inner circumference of the axial path 16a at its lower end, and the set screw 32 has its male thread 33 in threaded engagement with the female thread 31. In this case, the throttle 34 is provided in the form of a clearance between the male thread 33 and the female thread 31, but the throttle is not limited to this form.

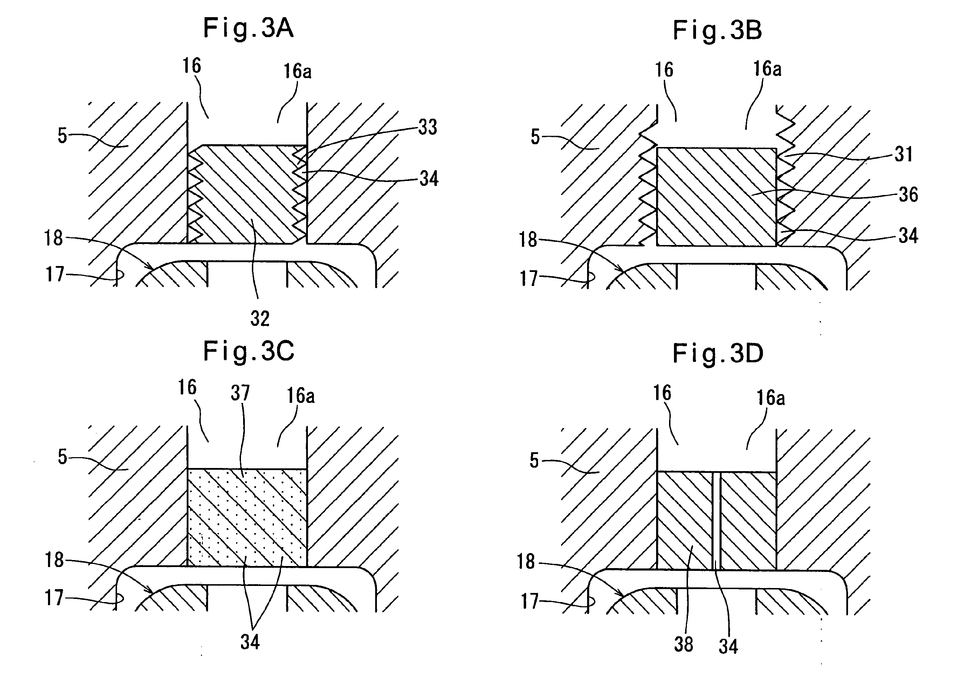

Different throttles 34 are shown in Figs. 3A to 3D. In Fig. 3A, a set screw 32 is pressed in the lower end of the axial path 16a of the communicating path 16, and the groove of the male thread 33 formed on the outer circumference of the set screw 32 is defined as a throttle 34.

In Fig. 3B, a female thread 31 is formed on the inner circumference of the lower end of the axial path 16a of the communicating path 16, and a cylindrical body 36 is pressed in the female thread 31. The groove of the female thread 31 is defined as a throttle 34.

In Fig. 3C, a cylindrical porous body 37 is pressed in the lower end of the axial path 16a of the communicating path 16, and the open pores of the porous body 37 are defined as a throttle 34.

In Fig. 3D, a cylindrical body 38 is pressed in the lower end of the axial path 16a of the communicating path 16, and a center hole with a small diameter formed in the center of the cylindrical body 38 is defined as a throttle 34.

In any of the embodiments of Figs. 3A to 3D, the throttle 34 can be formed more easily than drilling a small diameter throttle on the rod 5, and this reduces the manufacturing cost.

### [Brief Description of the Drawings]

Other features and objects of the present invention will become apparent from the following description made with reference to the accompanying drawings, in which:
Fig. 1 is a vertical sectional view of an embodiment of the hydraulic auto-tensioner related to this invention;
Fig. 2A is an enlarged sectional view of the area in which a relief valve is mounted in Fig. 1;
Fig. 2B is an enlarged sectional view of the throttle;
Figs. 3A to 3D are sectional views of the other embodiments of the throttles;
Fig. 4 is a front view of an adjustment device for an engine accessory drive belt.

## Claims

1. A hydraulic auto-tensioner comprising
a cylinder (1) having a closed bottom end and filled with hydraulic oil,
a sleeve (4) mounted in said cylinder (1) and uprising from the inner bottom surface of said cylinder (1),
a rod (5) with its lower end slidably inserted in the sleeve (4) and defining a pressure chamber (6) in the sleeve (4),
a spring seat (7) provided on the top of said rod (5),
a return spring (8) mounted between said spring seat (7) and the inner bottom surface of said cylinder (1), and biasing said cylinder (1) and said rod (5) in such a direction that said rod (5) protrudes from said cylinder (1), wherein a reservoir chamber (13) is defined between said cylinder (1) and said sleeve (4), the upper opening of said reservoir chamber (13) being closed, and
a check valve (15) provided in a path (14) communicating said reservoir chamber (13) with said pressure chamber (6) for closing said path (14) when the pressure in said pressure chamber (6) exceeds the pressure in said reservoir chamber (13),
**characterized in that**
said rod (5) is formed with a communicating path (16) communicating said pressure chamber (6) with said reservoir chamber (13),
a relief valve (18) is mounted in said communicating path (16) to open said communicating path (16) when the pressure in said pressure chamber (6) exceeds a set pressure, and
a throttle (34) is provided on the hydraulic oil outlet side of said relief valve (18).

2. The hydraulic auto-tensioner according to claim 1, **characterized in that** a female thread (31) is formed on the inner circumference of said communicating path (16), a set screw (32) has a male thread (33) thereof in threaded engagement with said female thread (31), and a clearance between said male thread (33) of said set screw (32) and said female thread (31) is defined as said throttle (34).

3. The hydraulic auto-tensioner according to claim 1, **characterized in that** a set screw (32) is pressed in said communicating path (16), and a groove of a male thread (33) formed on the outer circumference of said set screw (32) is defined as said throttle (34).

4. The hydraulic auto-tensioner according to claim 1, **characterized in that** a female thread (31) is formed on the inner circumference of the communicating path (16), a cylindrical body (36) is pressed in the female thread (31), and a groove of said female thread (31) is defined as said throttle (34).

5. The hydraulic auto-tensioner according to claim 1, **characterized in that** a cylindrical porous body (37) is pressed in said communicating path (16) and open pores of said porous body (37) are defined as said throttle (34).

6. The hydraulic auto-tensioner according to claim 1, **characterized in that** a cylindrical body (36) is pressed in said communicating path (16), and a center hole (28) with a small diameter formed in the center of said cylindrical body (36) is defined as said throttle (34).

7. The hydraulic auto-tensioner according to any of claims 1 to 6, **characterized in that** said throttle (34) is provided immediately above said relief valve (18).
